# FASCICULE DE BREVET EUROPEEN

(11) **EP 1 830 073 B1**
(45) Date de publication et mention de la délivrance du brevet: **14.01.2009**
(21) Numéro de dépôt: 07290230.7
(22) Date de dépôt: 22.02.2007
(51) Int. Cl.: F16B 2/22

(54) **Dispositif de fixation de deux piéces, l'une plaquée contre l'autre, au moyen d'une agrafe**
Vorrichtung zum Befestigen von zwei aneinanderliegenden Teilen mittels einer Klammer
Device for attaching two pieces, one pinned against the other, using a clip

(30) Priorité: 02.03.2006 FR 0650737
(43) Date de publication de la demande: 05.09.2007
(73) Titulaire: Lisi Automotive Rapid, 95650 Puiseux Pontoise (FR)
(72) Inventeur: Viennois, Fabien, 92600 Puteaux (FR)
(74) Mandataire: Berger, Helmut

(56) Documents cités:
- EP-A- 0 855 523
- GB-A- 1 138 191

## Description

L'invention concerne un dispositif de fixation de deux pièces, l'une plaquée contre l'autre, du type comprenant une agrafe s'étendant à travers des perçages axiaux alignés pratiqués dans les deux pièces, et des moyens de serrage des pièces à l'état plaquée l'une sur l'autre, l'agrafe comportant des languettes de verrouillage de l'agrafe sur la première pièce et des languettes de maintien des deux pièces à l'état serré l'une contre l'autre. Un tel dispositif est connu du document EP-A-0 855 523.

Les dispositifs de ce type, qui sont connus, présentent l'inconvénient majeur d'avoir une structure complexe nécessitant lors de la fixation des deux pièces l'une sur l'autre un grand nombre de gestes.

L'invention a pour but de proposer un dispositif du type défini plus haut, qui palie cet inconvénient.

Pour atteindre ce but, le dispositif de fixation selon l'invention est caractérisé en ce que, sous l'effet d'un ressort, les languettes de maintien et de verrouillage sont élastiquement déformables entre une position rapprochée permettant leur passage à travers l'orifice de la deuxième pièce et une position écartée après ce passage, assurant le maintien des deux pièces l'une plaquée sur l'autre, entre les languettes de maintien et les languettes de verrouillage.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
- la figure 1 est une vue en perspective d'un dispositif de fixation selon l'invention, avant son montage sur une première pièce ;
- la figure 2 est une vue en perspective du dispositif selon la figure 1, à l'état monté et verrouillé sur la première pièce ;
- la figure 3 est une vue en perspective du dispositif de fixation de la figure 1, verrouillé sur la première pièce devant la deuxième pièce devant être fixée sur la première pièce ;
- la figure 4 est une vue en perspective montrant la deuxième pièce lors du processus de sa fixation sur la première pièce, et
- la figure 5 est une vue en perspective illustrant les deux pièces fixées l'une sur l'autre à l'aide du dispositif de fixation selon l'invention.

Le dispositif de fixation selon l'invention, désigné par la référence générale 1, permet d'assembler ou fixer deux pièces ayant la forme générale de plaques, au moins au niveau du dispositif, tel qu'un pare-chocs ou aile de véhicule sur une pièce de support.

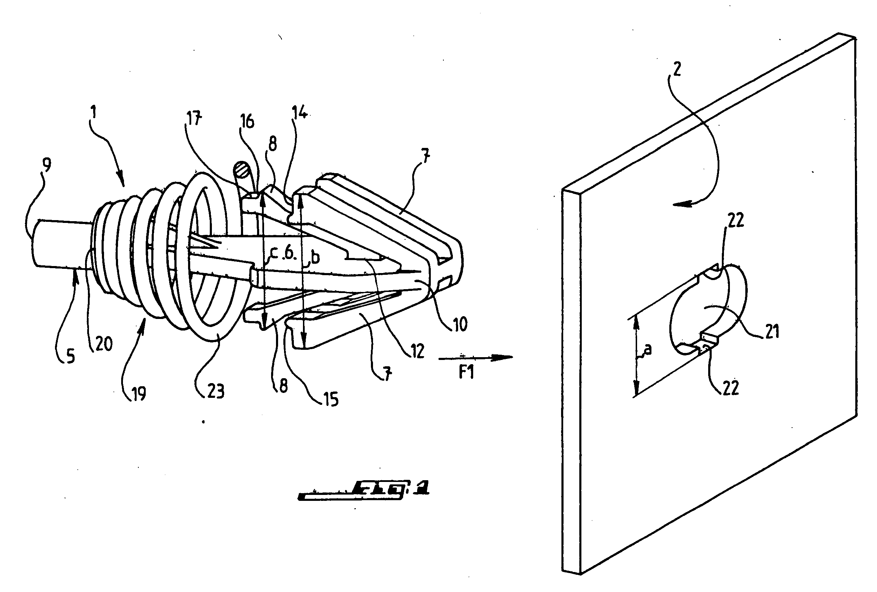

Selon la figure 1, le dispositif 1 de fixation d'une pièce 2 à une pièce 3 comporte essentiellement une agrafe 4 pourvue d'une partie en forme d'une tige 5 portant à son extrémité avant aplatie 6 quatre languettes de maintien 7 et deux languettes de verrouillage 8. Les languettes de maintien 7 s'étendent de l'extrémité de la tige 5 en direction de l'extrémité arrière 9, obliquement, en s'écartant progressivement de la partie de tige avant 6. Les languettes de maintien sont disposées de façon que deux languettes 7 se trouvent de l'un et les deux autres de l'autre côté de la partie d'extrémité aplatie 6. Les deux languettes de chaque paire sont séparées latéralement d'un écart indiqué en 10. Concernant les deux languettes de verrouillage 8, on constate qu'elles sont disposées de part et d'autre de la partie aplatie 6, entre les deux languettes de maintien correspondantes, dans l'espacement d'écartement 10. Alors que les languettes de maintien 7 s'étendent à partir de la pointe avant de la tige, les deux languettes de verrouillage 8 prennent naissance à une certaine distance de la pointe, à un emplacement noté 12.

Chacune des languettes de maintien se termine à son extrémité libre par une face frontale 14 perpendiculaire à l'axe de la tige et parallèle aux faces des pièces à assembler et du côté de la tige d'une face de talon 15 perpendiculaire à la face 14. Les languettes de verrouillage 8 présentent à leurs extrémités libres un profil en forme d'un L comportant une surface 16 parallèle à la face frontale 14 des languettes de maintien et une face 17 de talon perpendiculaire à la face 16.

Le dispositif de fixation 1 selon l'invention comporte en outre un ressort hélicoidal 19 monté autour de la tige 5 et dont une extrémité est en appui contre une butée 20 solidaire de la partie arrière de cette tige, tandis que son extrémité avant est adaptée pour venir en appui sur la première pièce lors du montage de l'agrafe sur celle-ci. Le ressort présente un profil tronconique, avec diminution du diamètre dans la direction de l'extrémité arrière 9.

Après la description de la configuration et structure du dispositif de fixation selon l'invention, notamment de l'agrafe, on décrira ci-après le procédé d'assemblage ou de fixation des deux pièces 2 et 3, l'une sur l'autre.

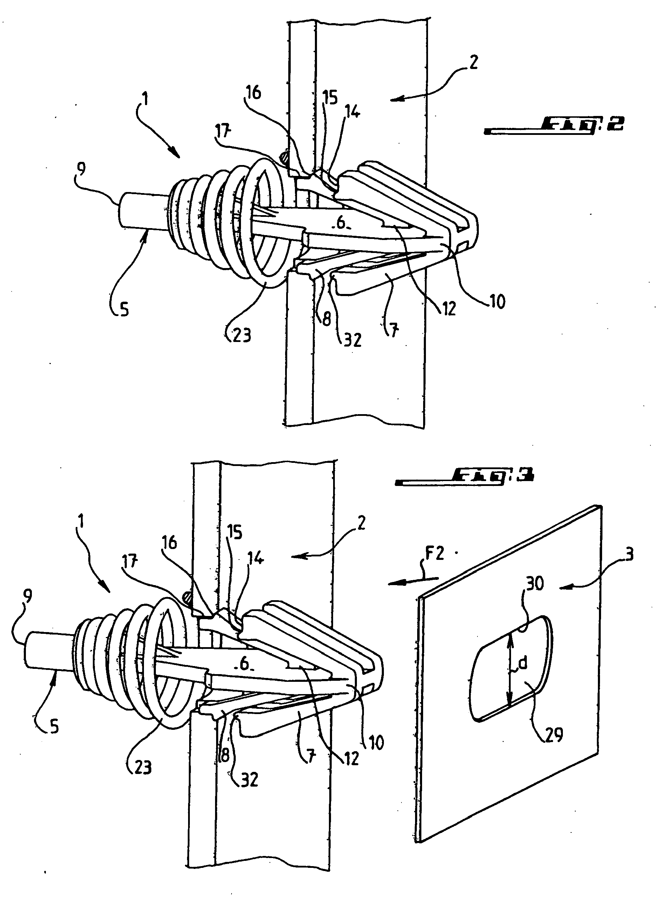

La figure 1 illustre l'agrafe pourvue du ressort 19 et la première pièce 2 en forme d'une plaque, au moins au niveau de la réception de l'agrafe, avant la mise en place de cette dernière sur cette pièce. La pièce 2 comporte un perçage ou orifice noté 21 de forme oblongue comportant sur ses deux côtés parallèles une rainure 22 d'un profil en forme d'un U. Ce perçage 21 et les languettes de maintien 7 et de verrouillage 8, en particulier la hauteur a du perçage 21 et les distances maximales b et c des languettes de maintien 7 et des languettes de verrouillage 8 sont configurées et dimensionnées de façon que la partie avant de l'agrafe puisse passer dans la direction de la flèche F1 à travers le perçage 21 grâce à la déviation élastique des languettes vers la partie de tige 6 jusqu'à sa position de verrouillage dans laquelle les languettes de maintien 7 se trouvent de l'autre côté de la pièce et sont revenues dans leur position initiale écartée et la pièce est insérée entre l'épaulement 16 à l'extrémité des languettes de verrouillage 8 et l'extrémité avant 23 du ressort 19, comme le montrent les figures 2 et 3, le fond des rainures 22 du perçage 21 de la pièce prenant appui sur les faces de talon 17 à l'extrémité des languettes de verrouillage.

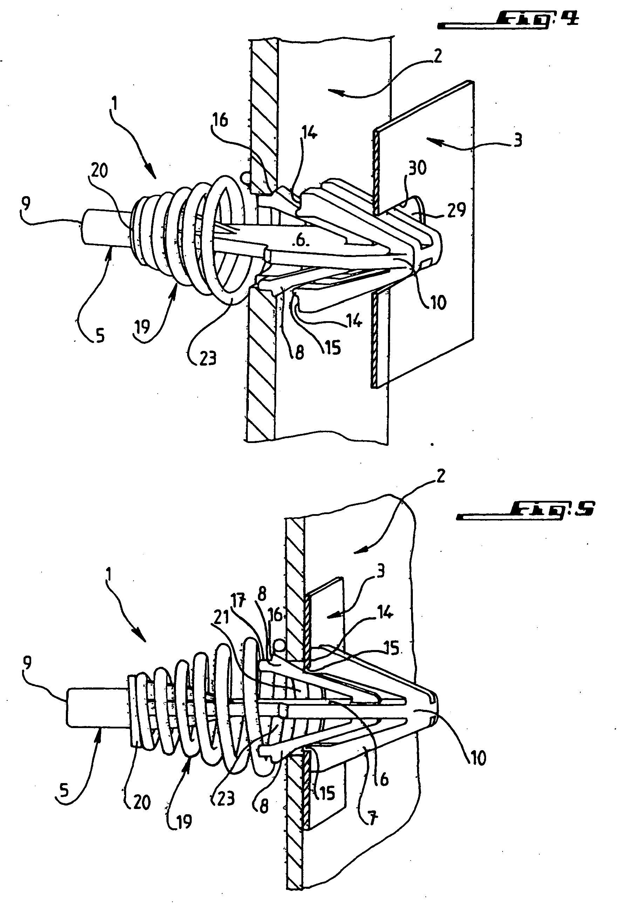

La fixation de la pièce 3 sur la pièce 2 se fait par un mouvement linéaire dans la direction de la flèche F2, qui fait passer les languettes de maintien à travers le perçage 29 pratiqué dans la pièce 2. La hauteur d de ce perçage, qui est inférieure à la hauteur a du perçage 21 dans la première pièce est dimensionnée de façon qu'après le passage de la pièce 3 sur les languettes de maintien 7, les bords 30 du perçage 29 en s'appuyant sur les languettes de verrouillage 8 provoquent le rapprochement élastique de celles-ci de façon qu'elles puissent se libérer de leur position de verrouillage sur la première pièce 2. Ceci a pour conséquence que les extrémités des languettes de verrouillage puissent repasser en arrière à travers le perçage 21 pour venir dans la position représentée sur la figure 5. Dans cette position, les deux pièces sont plaquées l'une sur l'autre entre les faces d'appui 14 à l'extrémité des languettes de maintien 7 et l'extrémité 23 du ressort 19, la face de talon étant en appui sur les bords 30 du perçage 29.

I1 ressort de la description qui vient d'être faite, que l'assemblage et la fixation des deux pièces 2, 3 l'une sur l'autre ne demandent qu'un minimum de gestes de montage, à savoir un premier mouvement de l'agrafe à travers le perçage 21 pour qu'elles soient verrouillées sur la première pièce et ensuite un mouvement rectiligne relatif de la seconde pièce par rapport à la première illustré par les figures 3 et 5.

## Revendications

1. Dispositif de fixation de deux pièces (2, 3), l'une plaquée sur l'autre, du type comprenant une agrafe (1) s'étendant à travers des perçages alignés pratiqués dans les deux pièces (2, 3), et pourvus de moyens de serrage des pièces l'une contre l'autre, l'agrafe (1) comportant des languettes de verrouillage (8) de l'agrafe sur la première pièce (2) et des languettes (7) de maintien des deux pièces (2, 3) à l'état serré l'une contre l'autre, **caractérisé en ce que**, sous l'effet d'un ressort (19), les languettes de maintien (7) et de verrouillage (8) sont élastiquement déplaçables entre une position écartée de non passage à travers les perçages (21, 29) et une position de passage à travers ces perçages.

2. Dispositif selon la revendication 1, **caractérisé en ce que** l'agrafe (1) comporte une partie en forme de tige (5) dont l'extrémité avant (6) est solidaire d'une extrémité des languettes de maintien (8) et de verrouillage (7), que ces languettes s'étendent en direction de l'extrémité arrière (9) de la tige en s'écartant de celle-ci, et **en ce que** le ressort (19) est monté sur la tige (5) de façon à exercer une pression en direction des extrémités libres des languettes.

3. Dispositif selon la revendication 2, **caractérisé en ce que** les languettes de verrouillage (8) comportent des surfaces d'appui (16, 17) des bords (30) du perçage (21) de la première pièce (2) et les languettes de maintien (7) comprennent des faces d'appui (14, 15) des bords du perçage (29) de la seconde pièce (3).

4. Dispositif selon la revendication 3, **caractérisé en ce que** les extrémités libres des languettes de verrouillage (8) sont disposées plus près du ressort (19) que les extrémités libres des languettes de maintien (7).

5. Dispositif selon la revendication 4, **caractérisé en ce que** l'agrafe (1) comporte au moins deux languettes de maintien (7) disposées sur la partie avant (6) de la tige de part et d'autre de celle-ci et au moins deux languettes de verrouillage (8) disposées régalement de part et d'autre de la partie (6) de la tige.

6. Dispositif selon l'une des revendications 4 ou 5, **caractérisé en ce que** l'agrafe (1) comporte quatre languettes de maintien (7) dont deux sont situées sur un côté de la tige et les deux autres sur l'autre côté de la tige.

7. Dispositif selon la revendication 6, **caractérisé en ce qu'**une languette de verrouillage (8) est disposée entre deux languettes de maintien (7).

8. Dispositif selon l'une des revendications 1 à 7, **caractérisé en ce que** l'agrafe (1) est vérouillée dans le perçage (21) de la première pièce (2) par serrage de cette pièce entre des faces d'appui (16, 17) à l'extrémité des languettes de verrouillage (8) et du ressort (19).

9. Dispositif selon l'une des revendications 1 à 7, **caractérisé en ce que** les languettes de verrouillage (8) sont déverrouillables de leur position de verrouillage de l'agrafe (1) sur la première pièce (2), par les bords du perçage (29) de la seconde pièce (3) après passage des bords par-dessus des languettes de maintien (7) dans une position en appui sur les extrémités des languettes de verrouillage (8), de façon que le ressort (19) puisse pousser la première pièce (2) contre la seconde pièce (3) qui est en appui sur les faces (14, 15) d'appui des languettes de maintien (7).

## Claims

1. A device for attaching two parts (2, 3), one being pressed against the other, of the type comprising a clip (1) extending through aligned bores made in both parts (2, 3), and equipped with means for tightening the parts to each other, with the clip (1) comprising tabs for locking (8) the clip on the first part (2) and tabs for holding (7) both parts (2, 3) in the state tightened one against the other, **characterized in that** under the effect of a spring (19), the holding (7) and locking (8) tabs are elastically movable between a spread open position not passing through the bores (21, 29) and a passing position through said bores.

2. The device according to claim 1, **characterized in that** the clip (1) comprises a rod-shaped portion (5) the front end (6) of which is integral with one end of the holding (7) and locking (8) tabs, that said tabs extend towards the rear end (9) of the rod by moving away therefrom, and that the spring (19) is mounted on the rod (5) so as to exert pressure towards the free ends of the tabs.

3. The device according to claim 2, **characterized in that** the locking (8) tabs comprise bearing surfaces (16, 17) of the edges (30) of the bore (21) of the first part (2) and the holding (7) tabs comprise bearing surfaces (14, 15) of the edges of the bore (29) of the second part (3).

4. The device according to claim 3, **characterized in that** the free ends of the locking (8) tabs are arranged closer to the spring (19) than the free ends of the holding (7) tabs.

5. The device according to claim 4, **characterized in that** the clip (1) comprises at least two holding (7) tabs arranged on the front portion (6) of the rod on both sides thereof and at least two locking (8) tabs also arranged on either side of the portion (6) of the rod.

6. The device according to any of claims 4 or 5, **characterized in that** the clip (1) comprises four holding (7) tabs, two of which are located on one side of the rod, and the other two on the other side of the rod.

7. The device according to claim 6, **characterized in that** a locking (8) tab is arranged between two holding (7) tabs.

8. The device according to any of claims 1 to 7, **characterized in that** the clip (1) is locked in the bore (21) of the first part (2) by tightening said part between bearing surfaces (16, 17) at the end of the locking (8) tabs and of the spring (19).

9. The device according to any of claims 1 to 7, **characterized in that** the locking (8) tabs can be unlocked from their position locking the clip (1) on the first part (2), by the edges of the bore (29) of the second part (3) after the edges have passed the holding (7) tabs in a position bearing on the ends of the locking (8) tabs, so that the spring (19) can push the first part (2) against the second part (3) which is bearing on the bearing surfaces (14, 15) of the holding (7) tabs.

## Patentansprüche

1. Vorrichtung zum Befestigen von zwei aneinander gedrückten Teilen (2, 3), von der Art, die eine Klammer (1) umfasst, die sich durch fluchtende Bohrungen erstreckt, die in den beiden Teilen (2, 3) angebracht sind, und mit Mitteln zum Festziehen der Teile aneinander ausgestattet ist, wobei die Klammer (1) Laschen zum Verriegeln (8) der Klammer auf dem ersten Teil (2) und Laschen (7) zum Halten der beiden Teile (2, 3) im gegeneinander festgezogenen Zustand umfasst, **dadurch gekennzeichnet, dass** unter der Einwirkung einer Feder (19), die Laschen zum Halten (7) und Verriegeln (8) zwischen einer gespreizten Nichtdurchgangsposition durch die Bohrungen (21, 29) und einer Durchgangsposition durch diese Bohrungen elastisch bewegbar sind.

2. Vorrichtung nach Anspruch 1, **dadurch gekennzeichnet, dass** die Klammer (1) einen stabförmigen Abschnitt (5) umfasst, dessen vorderes Ende (6) mit einen Ende der Laschen zum Halten (7) und Verriegeln (8) einstückig ist, dass diese Laschen sich in Richtung auf das hintere Ende (9) des Stabs bewegen, indem sie sich davon abspreizen, und dass die Feder (19) auf dem Stab (5) angebracht ist, um Druck in Richtung auf die freien Enden der Laschen auszuüben.

3. Vorrichtung nach Anspruch 2, **dadurch gekennzeichnet, dass** die Verriegelungslaschen (8) Flächen (16, 17) zum Abstützen der Ränder (30) der Bohrung (21) des ersten Teils (2) umfassen und die Haltelaschen (7) Flächen (14, 15) zum Abstützen der Ränder der Bohrung (29) des zweiten Teils (3) umfassen.

4. Vorrichtung nach Anspruch 3, **dadurch gekennzeichnet, dass** die freien Enden der Verriegelungslaschen (8) näher an der Feder (19) angeordnet sind als die freien Enden der Haltelaschen (7).

5. Vorrichtung nach Anspruch 4, **dadurch gekennzeichnet, dass** die Klammer (1) mindestens zwei Haltelaschen (7) umfasst, die auf dem vorderen Abschnitt (6) des Stabs auf beiden Seiten davon angeordnet sind und mindestens zwei Verriegelungslaschen (8) ebenfalls auf beiden Seiten des Abschnitts (6) des Stabs angeordnet sind.

6. Vorrichtung nach einem der Ansprüche 4 oder 5, **dadurch gekennzeichnet, dass** die Klammer (1) vier Haltelaschen (7) umfasst, von denen zwei sich auf einer Seite des Stabs und die anderen beiden sich auf der anderen Seite des Stabs befinden.

7. Vorrichtung nach Anspruch 6, **dadurch gekennzeichnet, dass** eine Verriegelungslasche (8) zwischen zwei Haltelaschen (7) angeordnet ist.

8. Vorrichtung nach einem der Ansprüche 1 bis 7, **dadurch gekennzeichnet, dass** die Klammer (1) in der Bohrung (21) des ersten Teils (2) durch Festziehen dieses Teils zwischen Stützflächen (16, 17) am Ende der Verriegelungslaschen (8) und der Feder (19) verriegelt ist.

9. Vorrichtung nach einem der Ansprüche 1 bis 7, **dadurch gekennzeichnet, dass** die Verriegelungslaschen (8) aus ihrer Position zum Verriegeln der Klammer (1) auf dem ersten Teil (2) entriegelt werden können, durch die Ränder der Bohrung (29) des zweiten Teils (3), nachdem die Ränder über die Haltelaschen (7) in eine Stützposition auf den Enden der Verriegelungslaschen (8) übergegangen sind, so dass die Feder (19) das erste Teil (2) gegen das zweite Teil (3) drücken kann, das auf den Abstützflächen (14, 15) der Haltelaschen (7) aufliegt.
